# EUROPEAN PATENT APPLICATION

(11) **EP 1 873 661 A2**
(43) Date of publication of application: **02.01.2008**
(21) Application number: 07107463.7
(22) Date of filing: 03.05.2007
(51) Int. Cl.: G06F 17/30, H04Q 7/32, H04M 3/493

(54) **Reusable multimodal application**

(30) Priority: 05.05.2006 US 418896; 14.04.2007 WO PCT/US2007/009102
(71) Applicant: Kirusa, Inc., New Providence, NJ 07974 (US)
(72) Inventor: Anderl, Ewald C., Middletown, NJ 07748 (US)
(74) Representative: Gill, David Alan

(57) **Abstract**

A method and system are disclosed herein for accepting multimodal inputs and deriving synchronized and processed information. A reusable multimodal application is provided on the mobile device. A user transmits a multimodal command to the multimodal platform via the mobile network. The one or more modes of communication that are inputted are transmitted to the multimodal platform(s) via the mobile network(s) and thereafter synchronized and processed at the multimodal platform. The synchronized and processed information is transmitted to the multimodal application. If required, the user verifies and appropriately modifies the synchronized and processed information. The verified and modified information are transferred from the multimodal application to the visual application. The final result(s) are derived by inputting the verified and modified results into the visual application.

## Description

### BACKGROUND

The present invention relates generally to the field of networked computing. More particularly, the invention provides a reusable multimodal application on a mobile device. As used herein, multimodality comprises any human mode of interaction on the input side of an application, for example, the user's voice, and/or any visual mode, etc., that allows users to speak, hear, type, touch or see in that application, and one or more human interaction modes on the output side of the application such as the ability to hear and visually see the output. Multimodal interactions thus extend web or other application user interface to allow multiple modes of interaction, offering users, for example, the choice of using their voice, or an input device such as a key pad, keyboard, mouse or stylus. For output, users will, for example, be able to listen to spoken prompts and audio, and to view information on graphical displays.

The market for ring tones, wall papers, and other content is a large and rapidly growing business for mobile operators and content providers. In addition, a significant number of commercial transactions take place over wireless application protocol (WAP) capable mobile devices. The content in the top-level menu visual interface of the WAP capable mobile devices need to be easily accessible to the user in order to effectively perform commercial transactions. Content that cannot be easily found and located by subscribers directly is a lost revenue opportunity for mobile operators and content providers.

Increasingly, applications are moved from a static environment, for example, a desktop computer, to a mobile environment or a set-top box environment, where the mobile devices are smaller and packed with functionalities. The keypad input facility in the mobile device is not user friendly for all types of input operations, and the ability to interact is constrained by the form factor of the device. There is an opportunity to improve the effectiveness in the use of current mobile visual applications on mobile devices, for example, for mobile devices using a browser, WAP, or x hyper text markup language (xHTML).

There is an unmet market need for a method and system that precludes the need of performing custom development for each application in order to provide a multimodal functionality to the mobile device.

There is an unmet market need for a method and system that implements multimodal functionality without requiring a replacement of the entire software or hardware infrastructure of the mobile device.

### SUMMARY OF THE INVENTION

Disclosed herein is a method and system for accepting multimodal inputs and deriving synchronized and processed information. A reusable multimodal application is provided on the mobile device. A user transmits multimodal commands to the multimodal platform via the mobile network. The one or more modes of communication that are inputted are transmitted to the multimodal platform(s) via the mobile network(s) and thereafter synchronized and processed at the multimodal platform. The synchronized and processed information is transmitted to the multimodal application. If required, the user verifies and appropriately modifies the synchronized and processed information. The verified and modified information is transferred from the multimodal application to the visual application. The final result(s) are derived by inputting the verified and modified information into the visual application.

The multimodal application seamlessly combines graphics, text and audio output with speech, text, and touch input to deliver dramatically enhanced end user and services experiences. Compared to single-mode voice and visual search applications, the multimodal application of this invention is easier and more intuitive to use. The method and system disclosed herein provides a multimodal application that allows the use of a plurality of modes of communication, whichever is desired or most effective depending on the data needed or the usage environment.

Also disclosed herein is a method using a multimodal application that serves, using a simple set of interface rules, a standard multimodal interface to any visual search interface. The multimodal application of this invention requires input from the user to determine a specific selection among a list of possible results. For example, the multimodal application could be used for searching a music album from among hundreds of possible selections.

The method disclosed herein enhances the selection process of menus on a mobile device by allowing the user to select from a visual list of choices using one or more modes of input.

Also disclosed herein is a method providing a multimodal application that precludes the need of performing custom development for each application in order to provide a multimodal functionality to the mobile device.

Also disclosed herein is a method of implementing multimodal functionality without requiring a replacement of the entire software or hardware infrastructure of the mobile device, for example, without the need to install a new browser on the mobile device.

Also disclosed herein is a method to enable telecommunications carriers to extend their existing visual based portals with text or touchtone input modes, and store-fronts on the mobile device, with a search capability capable of accepting multiple modes of input. For example, it is convenient for the users to speak the service or information topic that they are interested in, and see the service appear immediately on the phone, often bypassing several levels and menus in the process. It is also much easier to speak the name of a category, title, or artist and see that filled in as the text search criteria automatically. By making more content on the mobile device easily accessible, content providers and carriers can realize increased revenues.

The method disclosed herein also reduces the time taken to access a desired menu choice by optimally enabling multiple modes on a mobile device. For example, the method disclosed herein can reduce the time of choosing a desired menu from approximately thirty seconds and five key clicks down to three seconds and only one key click. Even if the menu structure in a portal on the mobile device were to change frequently, the multimodal application would enable the user to continue to effectively conduct transactions on the mobile device without difficulty.

A reusable multimodal application offers a significant revenue opportunity, and more importantly, a market capture and retention opportunity for the mobile operator. Capturing this opportunity is essential in the face of declining average revenue per user (ARPU) and increasing competitive pressure. By delivering a user-friendly multimodal experience, barriers to a user's adoption of new mobile applications and services are significantly reduced. A multimodal application offers opportunities including additional usage, bi-directional pull through of voice and data services, increased revenue from content providers, advertising revenue, premium services, churn reduction and upgrade potentials. The multimodal application gives workers operating in a mobility context, the opportunity to access and leverage the same systems and information that colleagues close to intranet resources enjoy.

### BRIEF DESCRIPTION OF THE DRAWINGS

The foregoing summary, as well as the following detailed description of the embodiments, is better understood when read in conjunction with the appended drawings. For the purpose of illustrating the invention, there is shown in the drawings exemplary constructions of the invention; however, the invention is not limited to the specific methods and instrumentalities disclosed.

**FIG. 1** illustrates a method of accepting multimodal inputs and deriving synchronized and processed information, the method implemented in a system comprising a plurality of mobile devices operated by users who are connected to a plurality of mobile networks that contains a plurality of multimodal platforms.

**FIG. 2** illustrates a system for accepting multimodal inputs and deriving synchronized and processed information, comprising a plurality of mobile devices operated by users who are connected to a plurality of mobile networks that contains a plurality of multimodal platforms.

**FIG. 3** illustrates the multiple modes of interaction between the user and the multimodal application.

### DETAILED DESCRIPTION OF THE INVENTION

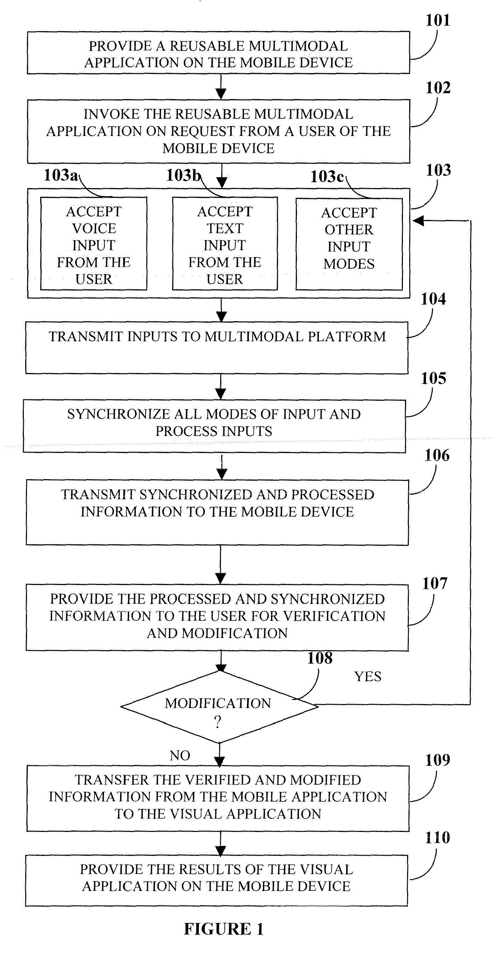

**FIG. 1** illustrates a method of accepting multimodal inputs and deriving synchronized and processed information, the method implemented in a system comprising a plurality of mobile devices operated by users who are connected to a plurality of mobile networks that contains a plurality of multimodal platforms. The plurality of mobile devices contain a plurality of applications. The plurality of applications also comprise visual applications. A multimodal application enables multimodality in the plurality of applications that reside on a plurality of mobile devices **101**. The multimodal application is invoked by invoking the visual application on the mobile device based on the request of the user **102**. The multimodal application accepts input information from the user in one or more modes of communication **103**, such as in voice **103a,** text **103b** and other input modes **103c.** The one or more modes of communication that are inputted are transmitted to the multimodal platform(s) via the mobile network(s) **104** and then synchronized and processed **105** at the multimodal platform. The synchronized and processed information is transmitted to the multimodal application **106**. The synchronized and processed information is provided to the user for verification and modification in one or more communication modes **107**.

The following example illustrates the synchronizing and processing step. If the input information is a search request in the form of an audio command along with text input, then the audio command and the text input, along with the associated search grammar of the multimodal application is transferred to the multimodal platform through the mobile network. The two modes of input, i.e., the audio command and text input are synchronized. Grammar elements associated with the command and search grammar are recognized by the multimodal platform. Processed information in the form of search words is determined by the multimodal platform based on the recognized grammar elements, and the synchronized and processed information is transferred back to the multimodal application.

If required, the user verifies and appropriately modifies the synchronized and processed information **108**. The verified and modified information is transferred from the multimodal application to the visual application **109**. The final result(s) is derived by inputting the verified and modified results into the visual application. The final results are provided to the user in one or more modes of communication **110**.

The system and method disclosed herein allows users to simultaneously use voice, text, graphics, keypad, stylus and haptic modes to interface with wireless services and applications.

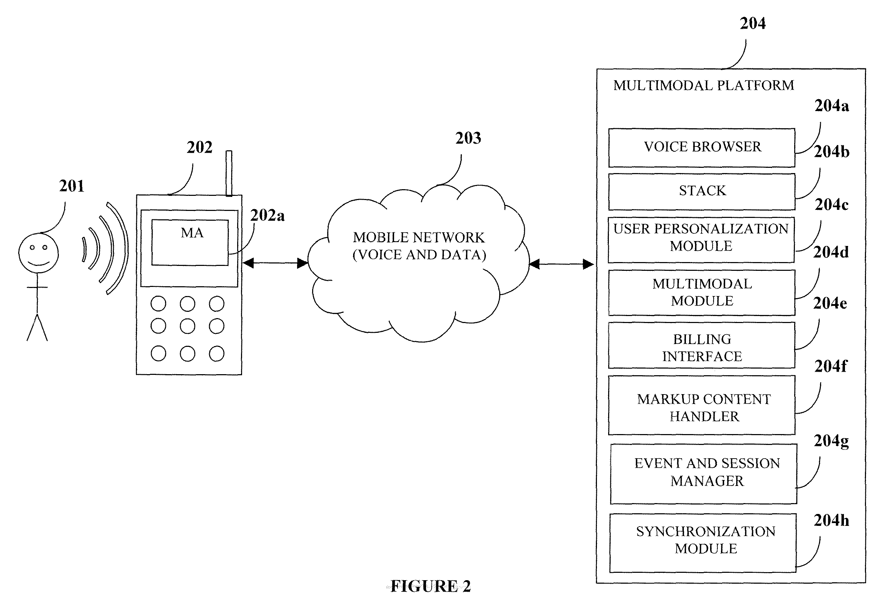

**FIG. 2** illustrates a system for accepting multimodal inputs and deriving synchronized and processed information, comprising a plurality of mobile devices operated by users who are connected to a plurality of mobile networks that contains a plurality of multimodal platforms. The mobile device **202** comprises a multimodal application **202a** that is capable of receiving inputs from the user **201** in multiple modes of input. The multimodal application **202a,** uses a set of interface rules to provide a standard input interface on the mobile device **202**. The mobile device **202** communicates with a multimodal platform **204** via a mobile network **203.** The system disclosed herein comprises a plurality of mobile devices, multimodal platforms and mobile networks. The multimodal platform **204** further comprises of a voice browser **204a**, stack **204b**, user personalization module **204c,** multimodal module **204d,** billing interface **204e,** a markup content handler **204f,** event and session manager **204 g**, and synchronization module **204h**. The voice browser **204a** allows users to conduct searches using audio commands. The stack **204b** is a reserved area of memory used to keep track of internal operations. The user personalization module **204c** stores user specific information. The multimodal module **204d** contains a grammar module for recognizing the grammar elements associated with an audio command. The billing interface **204e** generates user specific billing information. The markup content handler **204f** provides the visual markup or data content associated with the visual interface. Using the proposed invention, telecommunication carriers may monetize multimodal applications immediately, thereby leveraging devices already widely deployed in their networks. The event and session manager **204g** manages the events and sessions for networking activities associated with the multimodal platform **204.** The synchronization module **204h** synchronizes the voice, visual and haptic modes of communication.

The method and system disclosed herein supports a plurality of mobile network **203**, inclusive of, but not restricted to code division multiple access (CDMA), CDMA 1x/3x, global system for mobile communications (GSM), general packet radio service, (GPRS), universal mobile telecommunications system (UMTS), integrated digital enhanced network (iDEN), etc. The multimodal platform **204** receives the multimodal commands from the multimodal application **202a.** The multimodal platform **204** synchronizes and processes the input information and transfers the synchronized and processed information to the multimodal application **202a** located on the mobile device **202.** The multimodal platform **204** enables wireless carriers and service providers to offer applications with integrated voice and visual interfaces. In accordance with the embodiments of the method disclosed herein, the multimodal platform **204** may facilitate communication with mobile device **202** in multiple communication modes. For example, the multimodal platform **204** may be adapted to send audio information to and receive audio information from wireless telephone through a switch using a voice channel. The multimodal platform **204** may likewise be adapted to send visual data to and receive visual data from the mobile device **202** through a switch using a data channel. Moreover, the multimodal platform **204** may be adapted to change between these multiple modes of communication, or make multiple modes available simultaneously, according to instructions or existing communications conditions. The multimodal platform **204** may be embodied as a computing device programmed with instructions to perform these functions. In one embodiment of the invention, the voice and data connections run simultaneously over an internet protocol (IP) connection between the multimodal platform **204** and the multimodal application **202a.** The multimodal platform **204** is described in greater detail in U.S. patent no. 6,983,307, titled "Synchronization Among Plural Browsers", and U.S. application no. 10/369,361 titled "Technique for Synchronizing Visual and Voice Browsers to Enable Multi-Modal Browsing," filed February 18, 2003.

The multimodal application **202a** that accepts a plurality of modes of input, can be implemented in a number of ways. For example, the multimodal application can be implemented as a Java 2 micro edition (J2ME MIDlet), as a browser plug-in, etc. When a visual application, for example a WAP or xHTML browser requires a search, the visual application invokes the multimodal application **202a** with appropriate input parameters. The input parameters comprise the search grammar, the search service to use, the base home URL to visit in order to display, etc. If required, an appropriate audible prompt, such as text, for text to speech (TTS) output, or as an audio file can be provided. The multimodal application's **202a** appearance can be customized by specifying user interface (UI) parameters. For example, a custom logo can be introduced in the multimodal application. The multimodal application 202a comprises global grammar elements that can be invoked by the user using predefined multimodal invocation commands.

The multimodal application **202a** can accept audio input, which, along with the search grammar, is transferred, via the mobile network, to a multimodal platform. For example, the search grammar can be directly passed as an extensible markup language (XML) document, or a URL to a voice extensible markup language (VXML) page, or an extensible hyper text markup language (xHTML). VXML is a predefined set of rules or a language that enables a user to browse or interact with a device using voice recognition technology. XML is a text document that contains mark-up tags for conveying the structure of data and enables efficient data interchange between devices on the internet. xHTML is a combination of HTML and XML that is specifically applicable for internet enabled devices.

The multimodal application **202a** provides multiple modes of communication, inclusive of but not restricted to the voice mode, visual and haptic modes. When the voice mode is used, the microphone on the mobile device captures audio commands of the user. When the visual mode is used, data is captured on the mobile device on the keypad. For example, alpha-numeric data which may be represented in American standard code for information interchange (ASCII) form can be visually displayed. The multimodal application **202a** interfaces with the native visual and voice resources of the mobile device. The multimodal application **202a** can be installed on devices such as, but not restricted to Symbian operating system of Symbian Inc., USA, MS smartphone of Microsoft Inc., J2ME, binary run-time environment for wireless (brew), and Palm operating system of Palm Inc., USA, MS Pocket PC of Microsoft Inc., and MS Pocket PC phone edition of Microsoft Inc. The mobile device comprises a communication component and computing component. The computing component typically has a memory that stores data and instructions; a processor adapted to execute the instructions and manipulate the data stored in the memory; means for input, for example, a keypad, touch screen, microphone, etc.; and, means for output, for example, liquid crystal display (LCD), cathode ray tube (CRT), audio speaker, etc.. The communication component is a means for communicating with other mobile devices over a network, for example, an Ethernet port, a modem, a wireless transmitter/receiver for communicating in a wireless communications network, etc.

Depending on the usage context, the multimodal application **202a** can take multiple forms and can address a variety of user needs and enable different types of multimodality. Consider the case wherein a user desires to fill in a visual form on the UI using voice commands. The grammar elements in the voice command are recognized by the multimodal platform, and the synchronized and processed information is transferred back to the multimodal application **202a.** The multimodal application **202a** provides the synchronized and processed information as input to the visual application, for example in the form of an extended URL and the search term(s) filled into the visual form. The synchronized and processed information may be in the form of a single recognized search term, or as a list of possible recognized terms. The user can choose the correct item from the list of possible recognized terms and, once satisfied with the search term, the user can activate the search as is normally done with a visual-only application.

Examples of different variants of the multimodal application **202a** are as follows. The "SearchBar" variant of the multimodal application **202a** accepts audio input, which, along with the associated search grammar, is transferred via the mobile network to the multimodal platform. The SearchBar enables a user to go directly to a specific page of interest through voice input instead of having to navigate through several links. The SearchBar provides the result as input to the visual application, for example, in the form of an extended URL, and the search term(s) filled into the visual form. The "Inputbar" variant of the multimodal application **202a** is applied where more general information is required by the visual application. For example, consider the case when a user needs to purchase an item using their mobile device. The user needs to fill in their residential address in the "shipping address" section of the form displayed on the mobile device. The user then brings up the InputBar, and fills in the form using multiple modes of input, for example, fills in the form using both voice commands and the keypad. The "DictationBar" version of the multimodal application **202a** is applied where the input is freeform, such as a text or e-mail message. For example, consider a case where a user sends a short message service (SMS) reply. The user selects DictationBar to input the text. The user can then visually correct the text that is not spelled accurately, i.e., recognized incorrectly. The user can accomplish this correction activity by visually selecting the inaccurate text section and thereafter speaking or modifying the text section by visually typing or selecting from alternate displayed text that has a close recognition confidence. The "PortalBar" version of the SeachBar is used to access web-pages, by directly accessing the web-pages using multiple modes of input, from a general portal, for example Yahoo!, without the requirement for navigating through multiple links. The "IP Bar" version of the multimodal application **202a** enables a user to bookmark desired URL's with predefined voice commands, and the user can then access the desired URL's using voice commands. The bookmarking function is further described in co-pending application 10/211,117, titled "System and Method for Providing Multi-Modal Bookmarks," filed August 2, 2002.

The multimodal application **202a** can be preloaded on the mobile device, or downloaded onto the mobile device on demand, or it may be pre-burned onto the read only memory (ROM) of the mobile device. The multimodal application **202a** can also be implemented as a multimodal web page, or as a web browser.

The multimodal system architecture of this invention allows the use of standard capabilities, for example Java, Applets, the integration and interfacing with web, installing new applications on the device, etc. The multimodal system architecture of this invention can leverage all these capabilities without requiring a replacement of the entire software or hardware infrastructure of the mobile device, for example, without requiring the installation of a new browser on the mobile device.

In the current art, a multimodal infrastructure with a complete and simultaneous activation of all its modes of communication, including voice, key input and visuals, demands a significant amount of the mobile device's and the multimodal platform's resources. The method and system disclosed herein provides a preferential mode activation feature, wherein, only a preferred mode chosen by the user is activated at any point in time. For example, the visual mode will be activated when the user taps once on the multimodal application **202a** and indicates the preference for the visual mode only, following which, the user activates the voice mode by speaking or tapping twice.

The multimodal application **202a** supports both sequential multimodality and simultaneous multimodality.

Sequential multimodality allows users to move seamlessly between visual and voice modes. Sequential multimodality offers real value when different steps of a single application are more effective or efficient in one mode than the other. For example, in a navigation application, it may be easier to speak the name of the place (voice mode) than to type it, yet it may be preferable to view a map (visual mode) than to listen to directions that may involve a half dozen turns. The swap between two modes may be initiated by the application, or by the user. Sequential multimodality is described in greater detail in United States patent application 10/119,614, titled "Mode-Swapping in Multi-Modal Telephonic Application," filed April 10, 2002. Briefly, the state of the two modes, i.e., the visual and voice mode are synchronized. The multimodal application generates events relating to navigational activity being performed by a user in one mode. A representation of the events that have occurred in a multimodal session are recorded and are subsequently used to set the input in the second mode to a state equivalent to that which the input in the first mode would be in if the user had performed, on the input in the second mode, a navigational activity equivalent to that which the user performed on the input in the first mode.

In the case of simultaneous multimodality, where the device has both modes active, the user can communicate in the visual and voice mode simultaneously. For example, in a mapping example, a user can point to a street on the map and say: "Plan route, avoiding this street." In a retail banking application, with "From Account", "To Account", and "Amount" boxes on the screen, the user may enter the number "5000" in the amount box using the keypad, then simply speak "Transfer from Account 123 to Account 456; Enter" and all three entry boxes will be populated correctly and the information delivered to the multimodal platform **204.** The synchronized and processed information from the multimodal platform **204** can be delivered in voice mode, visual, or both and provide positive confirmation of the transaction.

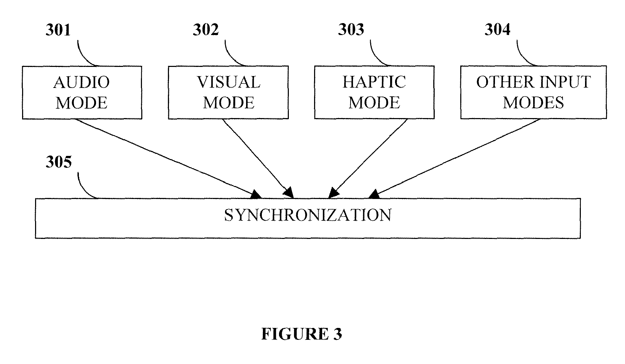

**FIG. 3** illustrates the multiple modes of interaction between the user and the multimodal application. The user communicates with the multimodal application **202a,** using one or more of the following modes: audio mode **301,** visual mode **302,** such as through a stylus, and haptic mode **303,** such as through a haptic device. The different modes are synchronized **305.** A haptic mode is a mode of communication, or interface with a computing device. For example, a mobile phone with haptic capabilities enables a haptic mode of input. The haptic mode of communication is enabled through a tactile method, and uses a haptic device that senses body movement or in general, a user's intention. For example, using a haptic glove, a user can feel and move a ball, and this movement is simultaneously effected on the display of the device, wherein the ball can be made to move correspondingly on the display of the device.

In addition to the audio, visual and haptic modes of input, the multimodal application **202a** can also accept other modes of input **304,** for example, global positioning system (GPS) inputs. For example, the user can say: "Make a reservation over there" while pointing their mobile device at a restaurant across the road. Assume that the mobile device is GPS enabled and is capable of deriving the position coordinates of objects it is pointed at. In this case, in addition to the audio and haptic input, the GPS input is also transferred to the multimodal platform **204.**

The multimodal system architecture of this invention enables push to talk over cellular (PoC) phones, wherein the push to talk command (PTT command) is transmitted to the multimodal platform for initiating or terminating a session. A session is initiated when the multimodal platform **204** becomes aware of the user, i.e., when the user is provided a plurality of modality interfaces and then the user invokes an initiation command through a predefined input. Similarly, the user can end a session with a predefined input, or session ends if the multimodal platform **204** ceases to register activity at the user's end.

The following example illustrates the multimodal application's **202a** ability to provide multimodal capabilities. Consider a case wherein a user desires to locate "Edison, NJ 08817" using the weblink Yahoo Maps on the user's mobile device. The user can double tap on the multimodal application **202a** residing in the UI of the mobile device, and then the user can provide the spoken command: "Locate Edison, NJ 08817". The method and system disclosed herein provides a means for mixing visual input tapping and speech inputs in a manner that is an easy and natural experience to the end user. Once the user has finished inputting the search parameters, the user can submit the map request.

This invention can be effectively applied in a variety of networks and usage environments. For example, it can be internet based with web and WAP interfaces to mobile devices, or it can be linked to a corporate intranet, or other private networks. For example, in a corporate application, the multimodal application **202a** can allow an employee of a firm to provide search input parameters specific to the local and network applications and resources of the firm. For example, an employee using the multimodal application **202a** can search for "John Smith", and access John Smith's contact information in the corporate address book. The multimodal application **202a** could formulate input parameters and have them available for accessing not only network resources and web based applications, but also for accessing resources within the mobile device.

The following example illustrates the use of this invention in field services. While inspecting a defective coke machine at the local gas station, Bill pulls out his handset and initiates the diagnostics application. Bill, then says: "Diagnostics for Coke machine". The device returns a list of available diagnostic tests. Bill scrolls and selects the "Cooling diagnostics" link, the second in the list, and sees a summary of the recommended diagnostics procedures for testing the machine. After performing a few diagnostic procedures, Bill concludes that one part needs to be replaced. Again using his handset, he switches to the purchasing part of the field application by saying: "New quote". The spoken command opens a quotation/order form. Bill says: "Add compressor XRT-65, quantity one", adding the correct part to the parts quotation. Then he issues the verbal commands: "Close quote" and "Fax to 555-233-2390" which faxes the parts quotations directly to the main office for processing.

The foregoing examples have been provided merely for the purpose of explanation and are in no way to be construed as limiting of the present method and system disclosed herein. While the invention has been described with reference to various embodiments, it is understood that the words which have been used herein are words of description and illustration, rather than words of limitations. Further, although the invention has been described herein with reference to particular means, materials and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope and spirit of the invention in its aspects.

## Claims

1. A method for inputting information and deriving results from a plurality of mobile devices operated by users who are connected to a mobile network containing a plurality of multimodal platforms, wherein said plurality of mobile devices contain a plurality of applications, wherein said plurality of applications also include visual applications, the method comprising the steps of:
providing a reusable multimodal application that enables multimodality in said plurality of applications on said plurality of mobile devices;
invoking said reusable multimodal application, wherein said step of invoking is performed by a visual application on a mobile device on the request of the user of said mobile device;
accepting the input information of the user by the reusable multimodal application in one or more modes of communication;
transmitting said input information to said multimodal platform via said mobile network;
synchronizing said input information that are in one or more modes of communication to create synchronized information;
processing said synchronized information and transmitting the synchronized and processed information to the reusable multimodal application;
providing said synchronized and processed information to the user for verification and modification in one or more input modes;
transferring said verified and modified information from the reusable multimodal application to the visual application; and
providing final results in one or more modes of communication, wherein said final results are derived by inputting said verified and modified results into the visual application.

2. The method of claim 1, wherein said modes of communication comprises audio, visual and haptic modes.

3. The method of claim 1, wherein if the mode of the users input to the mobile device is audio and text, the steps of transmitting said search request and determining the synchronized and processed information, further comprises the steps of:
transmitting said search request along with the associated search grammar derived by the reusable multimodal application via the mobile network to the multimodal platform;
recognizing grammar elements associated with the search request and said search grammar, wherein said grammar elements associations are predetermined; and
synchronizing the multiple modes of input to create synchronized information;
processing said synchronized information and determining search words based on said recognizing grammar elements and transferring said search words to the reusable multimodal application.

4. The method of any one or more of claims 1 to 3, wherein the visual application invokes appropriate input parameters at the reusable multimodal application comprising the search grammar and the search service to use.

5. The method of any one or more of claims 1 to 4, wherein said step of invoking the reusable multimodal application is activated upon a voice command from the user.

6. The method of any one or more of claims 1 to 5, wherein the reusable multimodal application is a search bar that enables a user to go directly to a specific web page of interest through voice input instead of having to navigate through several links on a browser.

7. The method of any one or more of claims 1 to 6, wherein the reusable multimodal application is an input bar wherein more general information is required by the visual application.

8. The method of any one or more of claims 1 to 7, wherein the input to the multimodal mobile search is freeform text.

9. The method of any one or more of claims 1 to 8, wherein the reusable multimodal application is a web portal.

10. The method of any one or more of claims 1 to 9, wherein the input to the reusable multimodal application is a uniform resource locator address.

11. The method of any one or more of claims 1 to 10, wherein the reusable multimodal application supports sequential multimodality, allowing users to move seamlessly between visual and voice modes.

12. The method of any one or more of claims 1 to 11, wherein the reusable multimodal application supports simultaneous use of voice and visual modes.

13. The method of any one or more of claims I to 12, wherein the reusable multimodal application further comprises global grammar elements that can be invoked by the user using predefined multimodal invocations.

14. A system for conducting a search on a mobile device of a user, comprising:
a mobile network;
a mobile device connected to said mobile network, further comprising a visual application;
a reusable multimodal application installed on said mobile device, wherein said reusable multimodal application uses a set of interface rules to provide a standard input interface to a visual search interface on the mobile device, wherein said reusable multimodal application receives multimodal commands from said user;
a multimodal platform located in said mobile network that receives and synchronizes said multimodal commands, processes said synchronized multimodal commands to create synchronized and processed information, and transfers said synchronized and processed information to said reusable multimodal application; and,
a visual interface that displays the synchronized and processes information to the user.
